# EUROPÄISCHE PATENTSCHRIFT

(11) **EP 0 993 918 B1**
(45) Veröffentlichungstag und Bekanntmachung des Hinweises auf die Patenterteilung: **06.10.2004**
(21) Anmeldenummer: 99120366.2
(22) Anmeldetag: 13.10.1999
(51) Int. Cl.: B25J 17/02

(54) **Bewegungseinrichtung zur Bewegung eines Endeffektors**
Device for movement of an end effector
Dispositif pour mouvement d'un effecteur d'extrémité

(30) Priorität: 15.10.1998 DE 19847502
(43) Veröffentlichungstag der Anmeldung: 19.04.2000
(73) Patentinhaber: Gebr. Schmid GmbH & Co., D-72250 Freudenstadt (DE)
(72) Erfinder: Erben, Marcus, Dipl.Ing., 65795 Hattersheim (DE); Gringel, Martin, Dipl. Ing., 72379 Hechingen (DE)
(74) Vertreter: Patentanwälte Ruff, Wilhelm, Beier, Dauster & Partner

(56) Entgegenhaltungen:
- EP-A- 0 674 969
- EP-A- 0 925 870
- WO-A-97/22436
- WO-A-99/08832
- DE-A- 19 525 482
- DE-C- 19 836 624
- US-A- 4 976 582

## Beschreibung

Die Erfindung betrifft eine Bewegungseinrichtung zur Bewegung eines Endeffektors, insbesondere für die Handhabung von Substraten in der Elektronikindustrie, die einen Träger aufweist, an dem der Endeffektor angeschlagen ist. Unter Träger kann eine gesamte Trageinrichtung verstanden werden oder mehrere Einzelträger, die zwar nicht direkt miteinander gekoppelt sind, aber durch jeweils raumfeste Zuordnung zueinander äquivalent zu einer einzigen Trageinrichtung sind. Endeffektoren sind beispielsweise Saugeinrichtungen, Spritzdüsen, Schweiß- bzw. Bearbeitungsköpfe oder Greifvorrichtungen. Sie sollen eine große Bewegungsvielfalt aufweisen.

Derartige Bewegungseinrichtungen sind beispielsweise Roboterarme, die um mehrere Gelenke drehbar sind. Durch diese Mehrgelenkigkeit sowie z.T. integrierte Antriebe sind solche Roboterarme aufwendig, teuer und schwer.

Aus der EP 0674969 A1 ist eine Koordinatenpositionierungs-Einrichtung bekannt, bei der ein Arm mittels dreier im Dreieck angeordneter Teleskopstützen frei im Raum bewegbar gelagert ist. An dem Arm ist eine Führung vorgesehen, welche jegliche Drehbewegung des Arms verhindert.

Aus der WO 97/22436 ist eine Vorrichtung zur Bewegung eines Körpers im Raum bekannt. An entlang Längsschienen verfahrbarer Schlitten ist mittels Verbindungsstangen eine Arbeitsplattform gelagert. Die Arbeitsplattform ist dabei völlig frei im Raum bewegbar sowie in ihrer Lage veränderbar.

Aus der US-PS 4,976,582 ist eine Einrichtung bekannt, mittels der ein Arbeitskopf frei im Raum bewegt und bezüglich seiner Lage verändert werden kann. Hierzu sind drei Gliederarme vorgesehen, welche im Dreieck zueinander angeordnet sind.

### AUFGABE UND LÖSUNG

Der Erfindung liegt die Aufgabe zugrunde, eine Bewegungseinrichtung der eingangs genannten Art zu schaffen, die einfach und mit begrenztem Aufwand zu realisieren ist, eine beliebige Bewegungsfreiheit innerhalb vorgegebener Grenzen bei gleichzeitiger hoher Positioniergenauigkeit ermöglicht sowie zuverlässig funktioniert und universell einsetzbar ist.

Diese Aufgabe wird durch die Merkmale des Anspruchs 1 gelöst. Eine erfindungsgemäße Bewegungseinrichtung mit wenigstens zwei linear arbeitenden Aktuatoren, die um unterschiedliche Achsen schwenkbar an dem Träger gelagert sind und an unterschiedlichen Punkten mit dem Endeffektor gelenkig verbunden sind sowie mit einem weiteren Antrieb zur Bewegung des Endeffektors ermöglicht eine Bewegung des Endeffektors in der gewünschten Bewegungsfreiheit. Durch Führungsmittel zur zwangsläufigen Bewegung des Endeffektors in einer vorgegebenen Bewegungsfläche können die Bewegungsmöglichkeiten definiert beschränkt werden sowie eine präzise Führung bzw. Bewegung des Endeffektors ermöglichen. Je nach Ausbildung der Führungsmittel können die Aktuatoren bzw. die Antriebe einfach ausgeführt sein, da sie von der Führungsfunktion enthoben sein können.

Gemäß einer bevorzugten Ausführungsvariante kann der weitere Antrieb des Endeffektors ein dritter linear arbeitender Aktuator sein, der um eine Achse schwenkbar an dem Träger gelagert und mit dem Endeffektor gelenkig verbunden ist. Vorteilhaft ist dieser weitere Linear-Aktuator ebenso ausgeführt wie die anderen Aktuatoren. Alternativ und/oder zusätzlich kann der weitere Antrieb ein Drehantrieb sein, der an einem Aktuator angreift. Vorzugsweise ist er in seiner Wirkungsweise zwischen einem Aktuator und dem Endeffektor angebracht, um den Endeffektor gegenüber dem Aktuator zu verschwenken bzw. zu verdrehen. Des weiteren ist es möglich, den Drehantrieb an dem Träger anzubringen und auf einen Aktuator wirken zu lassen. Dies hat den Vorteil, daß das Gewicht des Drehantriebes von dem Träger getragen wird und nicht von den Aktuatoren bewegt werden muß. Ein Drehantrieb kann ein konventioneller Getriebemotor sein.

In einer Ausführungsmöglichkeit können die Aktuatoren Vorschubantriebe mit einem Linearantrieb und einer damit gelenkig verbundenen Schubstange o. dgl. sein. Der Linearantrieb ist vorzugsweise richtungsfest, d.h. nicht verdrehbar, wobei er insbesondere an dem Träger befestigt sein kann. Die Schubstangen können an von dem Linearantrieb bewegten Drehlagern bewegt werden und die Kraft auf den Endeffektor übertragen. Dies hat den Vorteil, daß lediglich die Schubstangen mit einer geringen Masse bewegt und gelenkig gelagert werden müssen.

Gemäß einer alternativen Ausführung können die Aktuatoren als Teleskopantriebe ausgeführt sein, vorzugsweise hydraulischer oder pneumatischer Art. Derartige Teleskopantriebe sind weit verbreitet und von der Technik her ausgereift. Bevorzugt sind ihre Zylinder an dem Träger gelagert um die bewegten Massen gering zu halten.

Die Führungsmittel zur zwangsläufigen Bewegung des Endeffektors in einer vorgegebenen Bewegungsfläche weisen bevorzugt eine Gelenkkette auf, die mit dem Träger und dem Endeffektor gelenkig verbunden und nur in dieser Bewegungsfläche bewegbar ist. Eine Möglichkeit sieht vor, die Gelenkkette nach Art eines Knickgelenks aus einer an dem Träger gelagerten Schwinge und einer damit über ein Gelenk verbundenen und an dem Endeffektor gelagerten Koppel zu bilden. Die Gelenke und insbesondere auch Schwinge und Koppel sind vorteilhaft derart ausgeführt, daß sie verwindungssteif und mit exakter Führung versehen sind. Dies kann erreicht werden, indem die Gelenkkette Gelenkglieder und/oder Gelenke aufweist mit einer im Vergleich zu ihrer Länge erheblichen Breite bzw. Ausdehnung senkrecht zu der Bewegungsfläche. Darunter sind auch zwei parallel verlaufende Gelenkglieder zu verstehen, die senkrecht zur Bewegungsfläche versetzt sind und durch Streben o. dgl. verwindungssteif miteinander verbunden sind. Gemäß einer Möglichkeit weisen die Gelenke jeweils zwei Gelenkzapfenhalterungen auf, die zur Verbreiterung des Gelenks voneinander beabstandet sind.

Alternativ zu einer Führung durch eine separate Gelenkkette ist es möglich, die Drehgelenke wenigstens eines, vorzugsweise mehrerer Aktuatoren derart auszuführen, daß eine zwangsweise Führung des Endeffektors erfolgt. Ebenso können zwei Linear-Aktuatoren, vorzugsweise als Teleskopantriebe, parallel verlaufen und mechanisch gekoppelt sein um quasi eine aktive Führungsschwinge zu bilden.

Zwar kann die vorgegebene Bewegungsfläche durchaus ein Verschwenken des Endeffektors auf einer nichtebenen Bewegungsbahn, z.B. einer gekrümmten Fläche, umfassen, bevorzugt ist sie jedoch eine Bewegungsebene. Die Führungsmittel weisen vorteilhaft Gelenk- bzw. Drehachsen auf, welche senkrecht zu dieser Bewegungsebene verlaufen. Mit zueinander versetzten Gelenk- bzw. Drehachsen könnte eine zwangsläufige taumelnde Bewegung erzielt werden.

Wenigstens ein Aktuator kann derart an dem Träger gelagert sein, daß sein Gewichtsschwerpunkt in einer durchschnittlichen und/oder häufig angefahreren Stellung des Endeffektors in etwa in seinem Lagerpunkt an dem Träger liegt. Auf diese Weise balanciert sich der Aktuator in dieser Stellung im wesentlichen selber aus, so daß keine Haltekräfte aufgrund seiner eigenen Masse aufzubringen sind.

Zur Erweiterung der Funktionsmöglichkeiten können Bewegungsmittel zur Bewegung von an dem Endeffektor angebrachten Vorrichtungen vorgesehen sein, die eine im wesentlichen senkrecht zur Bewegungsfläche verlaufende Bewegungsrichtung aufweisen. Da der Endeffektor in seiner Bewegungsbahn relativ zu dem Träger festgelegt ist, kann dies einerseits durch Bewegung des Trägers insgesamt, beispielsweise gegenüber zugeordneten Arbeitseinrichtungen o. dgl., erreicht werden. Vorzugsweise sind die Bewegungsmittel an dem Endeffektor vorgesehen und tragen Vorrichtungen wie beispielsweise eine Greifvorrichtung zur Erfassung von Gegenständen. Dies kann insbesondere eine Saugvorrichtung zum Erfassen flacher Gegenstände durch Unterdruck sein.

Bevorzugt verläuft in einer Grundstellung des Endeffektors eine Linie durch wenigstens zwei Lagerpunkte der Aktuatoren an dem Träger in einem Winkel zu einer Linie durch wenigstens zwei Lagerpunkte von Aktuatoren an dem Endeffektor. Der Winkel kann in einem Bereich zwischen 30° und 60° liegen. Von dieser Grundstellung aus kann der Endeffektor in einem weiten Winkelbereich verschwenkt werden, vorzugsweise um bis zu 90°. Größere Winkel sind möglich, werden in der Praxis jedoch nur selten benötigt.

Im wesentlichen befindet sich der Endeffektor unterhalb des Trägers und der Aktuatoren, wobei er hauptsächlich nach unten und seitwärts in Verlaufsrichtung der Bewegungsfläche arbeitet. Vorzugsweise sind an einer Seite des Trägers Führungsmittel zur Führung des Endeffektors vorgesehen, der hauptsächlich zu der anderen Seite hin bewegbar ist bzw. arbeitet.

Bevorzugt ist der Endeffektor über eine Führungsschwinge und wenigstens drei Aktuatoren an dem Träger angeschlagen. Mindestens zwei Aktuatoren können eine gemeinsame Schwenkachse an dem Träger aufweisen, ebenso wenigstens zwei Aktuatoren eine gemeinsame Achse am Endeffektor. Falls nicht eine Doppelansteuerung erwünscht ist, muß darauf geachtet werden, daß nicht zwei Aktuatoren jeweils gemeinsame Achsen haben. Insgesamt solten bei linearen Aktuatoren sowohl am Träger als auch am Endeffektor wenigstens zwei Achsen vorhanden sein, von denen jeweils eine doppelt belegt sein kann. Dadurch vereinfacht sich die "Mathematik der Steuerung" erheblich.

Die Bewegungseinrichtung kann eine Lageerfassungseinrichtung für den Endeffektor aufweisen, wobei Erfassungsmittel bevorzugt an den Aktuatoren angebracht sind. Dies können Weg-Erfassungs-Sensoren an den Aktuatoren selber, beispielsweise zwischen Zylinder und Kolbenstange bei Teleskopantrieben, sein. Alternativ sind Drehwinkelgeber an den Lagerpunkten möglich. Linearantriebe für Vorschubantriebe haben derartige Erfassungmittel vorteilhaft meist integriert.

Zur Handhabung der komplexen Bewegungsabläufe des Endeffektors ist eine Steuerung vorteilhaft, die eine Verarbeitungseinheit zur Erzeugung von Steuersignalen aus Signalen der Lageerfassungseinrichtung für die Aktuatoren und/oder die weiteren Antriebe aufweist. Das bedeutet, daß die Steuerung beispielsweise im Fall von Teleskopantrieben jederzeit die Ausfahrlänge der einzelnen Antriebe kennt und daraus durch Winkeltransformation die exakte Position des Endeffektors berechnen kann. Derartige Transformationen sowie weitere Daten können von der Steuerung in einem Speicher für bewegungseinrichtungsspezifische Daten abgespeichert sowie jederzeit aufgerufen werden. Zu beachten ist, daß durch die wenigstens drei gekoppelten Aktuatoren und/oder Antriebe ein statisch überbestimmtes System vorliegt, so daß jederzeit alle Aktuatoren bzw. Antriebe für eine Bewegung angesteuert werden. Geeignet sind z.B. mikroprozessor-basierte Steuerungen mit hoher Rechenleistung.

Diese und weitere Merkmale von Ausführungsbeispielen der Erfindung gehen außer aus den abhängigen Ansprüchen auch aus der Beschreibung und den Zeichnungen hervor. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

In den Zeichnungen sind verschiedene Ausführungsbeispiele, z.T. schematisch, dargestellt und werden im folgenden näher erläutert. In den Zeichnungen zeigen:
- Fig. 1: eine schematische Darstellung einer Hybridkinematik mit drei Teleskopantrieben und einer seitlichen Führungsschwinge, die einen Endeffektor tragen,
- Fig. 2: eine schematische Darstellung einer Kinematik mit drei Vorschubantrieben sowie einer seitlichen Führungsschwinge,
- Fig. 3: eine Seitenansicht einer erfindungsgemäßen Bewegungseinrichtung mit drei Teleskopantrieben und einer Führungsschwinge und
- Fig. 4: eine Schrägansicht einer Variation von Fig. 3 mit einem geschlossenen Gestell.

### DETAILLIERTE BESCHREIBUNG DER AUSFÜHRUNGSBEISPIELE

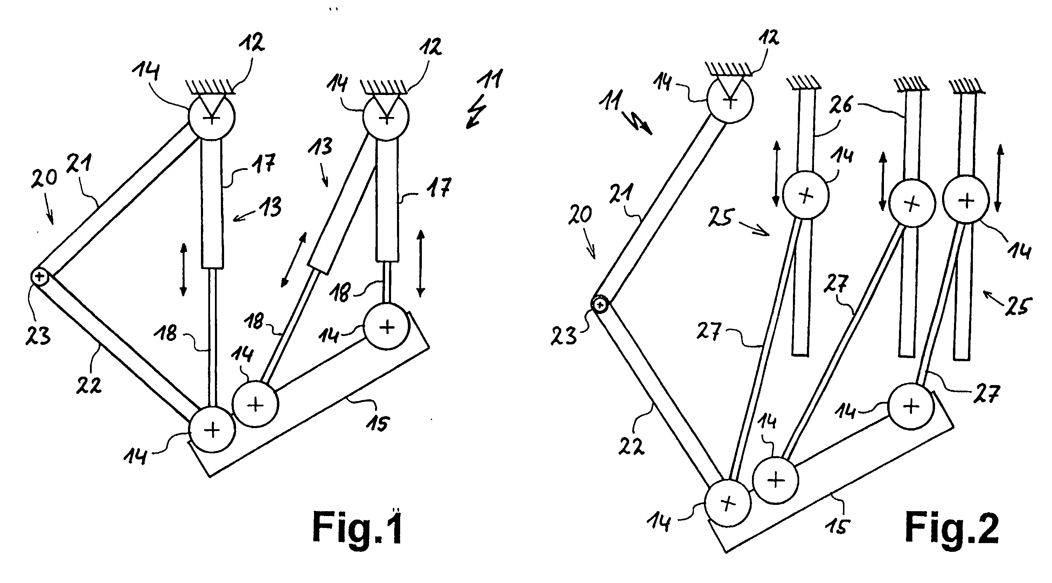

Fig. 1 zeigt eine Ausführung einer erfindungsgemäßen Bewegungseinrichtung 11. An zwei ortsfesten Lagerungen 12 sind ein bzw. zwei Aktuatoren 13 schwenkbar mittels Drehlager 14 gelagert, und mittels weiterer Drehlager 14 mit einem Endeffektor 15 verbunden. Die Aktuatoren 13 sind als Teleskopantriebe ausgeführt, wobei die Zylinder 17 an den ortsfesten Lagerungen 12 gelagert sind und mit Teleskopkolben 18 mit dem Endeffektor 15 verbunden sind.

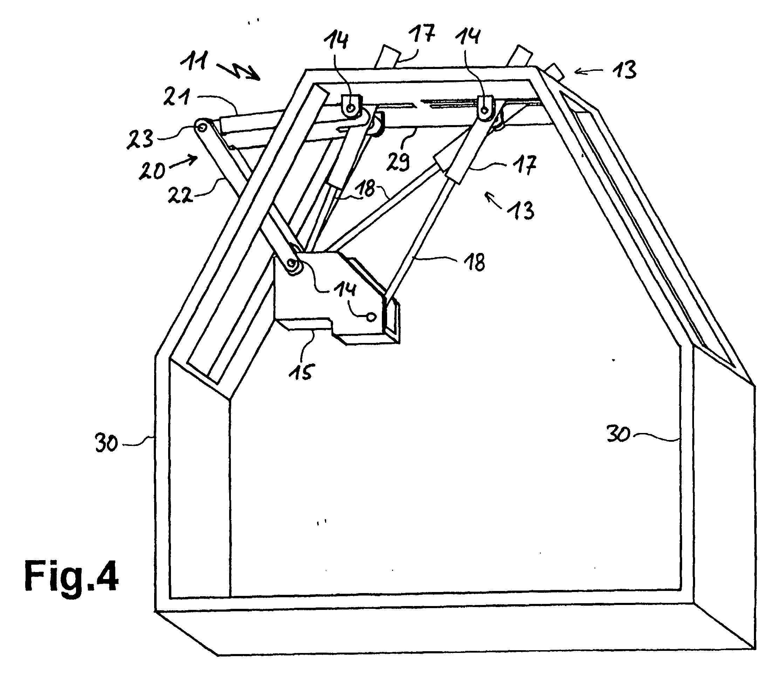

An der linken ortsfesten Lagerung 12 ist an dem Drehlager 14 eine Führungsschwinge 20 gelagert, die mittels eines weiteren Drehlagers 14 mit dem Endeffektor 15 verbunden ist. Die Führungsschwinge 20 besteht aus einer an der Lagerung 12 gelagerten Schwinge 21 sowie einer über ein Gelenk 23 damit verbundenen Koppel 22. Die Führungsschwinge 20 ist, wie auch in Fig. 4 dargestellt, derart ausgeführt, daß sie möglichst verwindungssteif sowie zur Bewegung lediglich in einer Bewegungsebene ausgebildet ist, die parallel zur Zeichenebene verläuft. Dies kann durch eine breite Schwinge 21 sowie Koppel 22 mit einer erheblichen Ausdehnung senkrecht zur Bewegungsebene erzielt werden.

Zur Vereinfachung des Aufbaus können Drehlager 14 zusammengefaßt werden, so wie beispielsweise die Führungsschwinge 20 mit dem linken Aktuator 13 und die beiden Zylinder 17 der rechten Aktuatoren 13 jeweils an gemeinsamen Drehlagern 14 gelagert sind.

Die Fig. 2 zeigt eine alternative Bewegungseinrichtung 11, bei der als Aktuatoren anstelle von Teleskopantrieben gem. Fig. 1 Vorschubantriebe 25 zum Einsatz kommen. Diese Vorschubantriebe 25 bestehen aus einem Linearantrieb 26, der ortsfest gelagert ist, und einem daran verschiebbar angebrachten Drehlager 14. Es ist möglich, das Drehlager 14 an einer Längsführung zu führen und mit beliebigen Antrieben, beispielsweise Zahnstangen, Riemenantrieben o. dgl. zu bewegen. An dem Drehlager 14 ist eine Schubstange 27 angebracht, die mit einem weiteren Drehlager 14 an dem Endeffektor 15 verbunden ist. Der Unterschied solcher Vorschubantriebe 25 im Vergleich zu den Teleskopantrieben gem. Fig. 1 liegt vor allem darin, daß sie mechanisch robuster ausgeführt werden können und auf bewährte Komponenten der Linearantriebstechnik zurückgreifen können. Entsprechend Fig. 1 ist eine Führungsschwinge 20 zur Führung des Endeffektors 15 bei einer Bewegung in der vorgegebenen Bewegungsfläche vorgesehen.

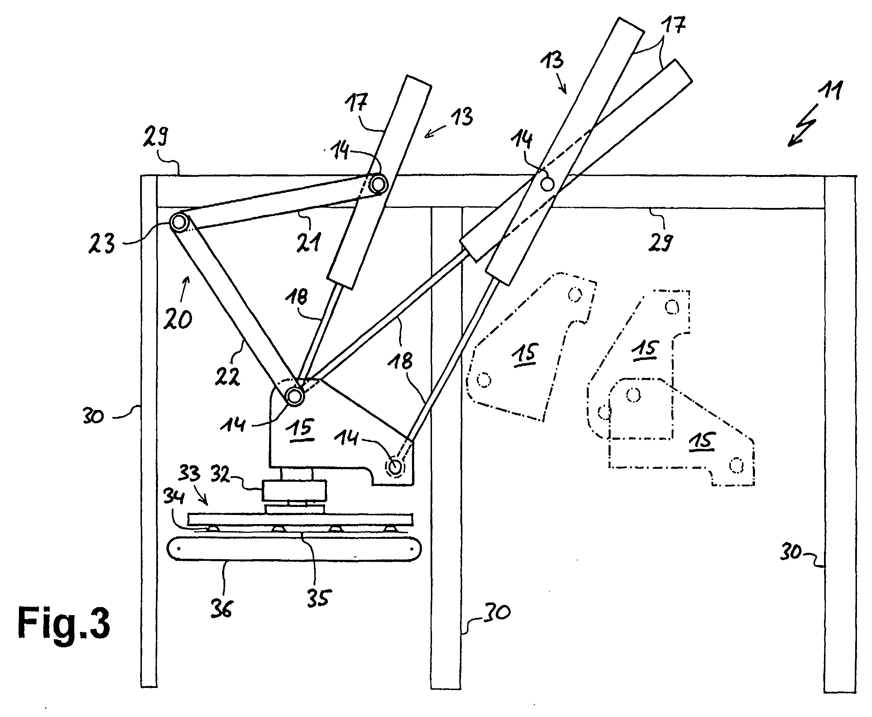

Die Fig. 3 zeigt eine Bewegungseinrichtung 11 ähnlich Fig. 1 mit einem Träger 29 samt Gestell 30. Vorgesehen sind drei TEleskopantriebe mit Zylindern 17 und Teleskopkolben 18 sowie eine Führungsschwinge 20, die an Drehlagern 14 an dem Träger 29 und an dem Endeffektor 15 gelagert sind. Der linke Aktuator 13 weist dieselben Drehachsen wie die Führungsschwinge 20 auf. In etwa parallel zu diesem Aktuator verläuft der rechte Aktuator 13, während der mittlere am Träger 29 dieselbe Drehachse wie der linke Aktuator aufweist. Auf diese Weise läßt sich die Anzahl der Drehachsen und somit der mechanische Aufwand reduzieren. Hier ist zu erkennen, daß die Drehlager 14 nicht am äußeren Ende der Zylinder 17 vorgesehen sind, sondern in etwa in der Mitte bzw. weiter hin zu den Teleskopkolben 18. Damit kann zumindest ein Teil ihres eigenen Gewichts ausbalanciert bzw. neutralisiert werden, so daß hierfür keine Haltekräfte erforderlich sind.

Während die Führungsschwinge 20 nach Art einer Gabel den linken Teleskopantrieb sowie den Endeffektor 15 einschließt, sind die Teleskopantriebe zueinander in die Zeichenebene hinein versetzt. So schränken sie ihre eigene Bewegungsfähigkeit nicht ein.

An der Unterseite des Endeffektors 15 ist eine Verschiebeeinrichtung 32 vorgesehen, die wiederum eine Greifvorrichtung 33 trägt. Mittels der Verschiebeeinrichtung 32 ist die Greifvorrichtung 33 im dargestellten Beispiel in einer Richtung senkrecht zu der Zeichen- bzw. Bewegungsebene verschiebbar. Somit wird eine völlig freie Bewegbarkeit der Greifvorrichtung 33 erzielt. Im dargestellten Beispiel sind an der Greifvorrichtung 33 Sauger 34 vorgesehen, die eine dünne Leiterplatte erfassen und von einem Transportband 36 abheben können. Diese Leiterplatte 35 soll mit der Bewegungseinrichtung 11 weiter transportiert werden, evtl. in eine bestimmte Position bzw. zu einer bestimmten Stelle. Ein Anwendungsbeispiel ist das Magazinieren von solchen Leiterplatten 30 in verschiedene Arten von Kassetten mit unterschiedlichen Winkelstellungen.

Strichpunktiert sind beispielhaft verschiedene Stellungen des Endeffektors 15 dargestellt, die erreicht werden können. Bei einer davon ist der Endeffektor 15 neben einer Bewegung seitlich nach rechts und nach oben um ca. 80° verschwenkt worden, bei der mittleren Stellung sind es in etwa 90°. In der ganz rechten Stellung ist lediglich eine Art Parallelverschiebung erfolgt. Eine Bewegung des Endeffektors setzt sich somit aus translatorischen und rotatorischen Komponenten zusammen.

Fig. 4 ist eine perspektivische Ansicht einer Bewegungseinrichtung 11 von unten ähnlich Fig. 3, allerdings mit einem Träger 29 an einer Art geschlossenem Gestell 30. Die prinzipielle Anordnung der Drehachsen bzw. Drehlager 14 entspricht in etwa der Fig. 3. Deutlich ist zu erkennen, daß die Schwinge 21 und die Koppel 22 der Führungsschwinge 20 eine erhebliche Breite aufweisen, um ein sicheres und genaues Führen in der vorgegebenen Bewegungsebene zu gewährleisten. Die Schwinge 21 übergreift den Zylinder 17 des linken Teleskopantriebes, während die Koppel 22 den Endeffektor 15 übergreift. Der mittlere Teleskopantrieb ist weiter in die Zeichenebene hinein versetzt als der rechte Teleskopantrieb, und sein Teleskopkolben 18 ebenso im Vergleich zum Teleskopkolben 18 des linken Teleskopantriebes. Es ist vorteilhaft, die Lagerpunkte der Teleskopantriebe an dem Endeffektor 15 so zu bestimmen, insbesondere quer zur Bewegungsebene, daß bei gleichmäßiger Belastung des Endeffektors 15 dieser schon durch sein Gewicht an den drei Teleskopantrieben in etwa innerhalb der vorgegebenen Bewegungsfläche geführt wird. Eine Pendelbewegung soll vermieden werden. Die Lagerpunkte sind insbesondere dann besonders gut gewählt, wenn die Führung im wesentlichen weggelassen werden könnte.

### FUNKTION

In der folgenden Funktionsbeschreibung soll von einer Bewegungseinrichtung ausgegangen werden, bei der eine Führungseinrichtung vorgesehen ist, die für ein genaues Einhalten der Bewegungsebene sorgt. Dies kann durch eine oder mehrere der dargestellten Führungsschwingen 20 erfolgen, ebenso durch senkrecht zur Zeichenebene versetzte Paare von linear arbeitenden Aktuatoren, oder Drehlager 14, die in Verbindung mit den Aktuatoren derart verwindungssteif und präzise gefertigt sind, daß der Endeffektor 15 lediglich in der vorgegebenen Bewegungsebene bewegbar ist. Im folgenden wird eine solche Führung vorausgesetzt und nicht weiter derart eingegangen.

Durch die drei unabhängigen Antriebe der ebenen Getriebemechanik erhält man ein statisch überbestimmtes System. Soll eine Bewegung erfolgen, müssen alle Aktuatoren bzw. Antriebe betätigt werden, bei insgesamt drei Aktuatoren bzw. Antrieben darf keiner leerlaufen. Das Funktionsprinzip kann so beschrieben werden, daß zwei Aktuatoren bzw. Antriebe die Position des Endeffektors innerhalb der Bewegungsebene festlegen, während ein weiterer die Lage bzw. Winkelstellung bedingt. In der Darstellung der Fig. 3 wird dies dadurch veranschaulicht, daß der linke und der mittlere Aktuator 13 das linke Drehlager 14, an dem beide angreifen, im Zusammenspiel beliebig positionieren können. Über den rechten dritten Aktuator, der an dem rechten Drehlager 14 des Endeffektors 15 angreift, kann die Winkelstellung des Endeffektors durch Verschwenken eingestellt werden.

Es ist möglich, zwei linear arbeitende Aktuatoren und einen Drehantrieb einzusetzen. In dem Beispiel der Fig. 3 könnte der rechte Teleskopantrieb gegen einen Drehantrieb ausgetauscht werden. Der Drehantrieb könnte entweder in einem der drei übrigen Drehlager 14 zwischen einem der Teleskopantriebe und dem Träger 29, dem Endeffektor 15 oder der Führungsschwinge 20 wirken. Eine weitere Möglichkeit wäre im Bereich des Gelenks 23 zwischen Schwinge 21 und Koppel 22. Dieser Drehantrieb würde bei Weglassen des linken Aktuators die Aufgabe des Positionierens des linken Drehlagers 14 des Endeffektors 15 übernehmen.

## Patentansprüche

1. Bewegungseinrichtung (11) zur Bewegung eines Endeffektors (15), insbesondere für die Handhabung von Substraten (35) in der Elektronikindustrie, die einen Träger (29) aufweist, an dem der Endeffektor (15) in einer vorgegebenen Bewegungsfläche beweglich angeschlagen ist, mit:
- wenigstens zwei linear arbeitenden Aktuatoren (13, 25), die um unterschiedliche Achsen (14) an dem Träger (29) schwenkbar gelagert sind und an unterschiedlichen Punkten (14) mit dem Endeffektor (15) gelenkig verbunden sind,
- einem weiteren Antrieb (13, 25) zur Bewegung des Endeffektors (15) und
- mit Führungsmitteln zur zwangsläufigen Bewegung des Endeffektors (15) in der vorgegebenen Bewegungsfläche,
wobei der Endeffektor (15) über eine Führungsschwinge (20) als Führungsmittel und drei linear arbeitende Aktuatoren (13, 25) mit dem Träger (29) verbunden ist, wobei zwei Aktuatoren eine gemeinsame Schwenkachse (14) an dem Träger (29) aufweisen und/oder genau einer dieser Aktuatoren eine gemeinsame Schwenkachse (14) mit dem dritten Aktuator an dem Endeffektor (15) aufweist.

2. Bewegungseinrichtung nach Anspruch 1, **dadurch gekennzeichnet, daß** der weitere Antrieb ein dritter linear arbeitender Aktuator (13, 25) ist, der um eine Achse (14) an dem Träger (29) schwenkbar gelagert ist und mit dem Endeffektor (15) gelenkig verbunden ist.

3. Bewegungseinrichtung nach Anspruch 1, **dadurch gekennzeichnet, daß** der weitere Antrieb ein Drehantrieb ist, der an einem Aktuator (13, 25) angreift, wobei er vorzugsweise zwischen dem Aktuator und dem Endeffektor (15) angebracht ist zur Verdrehung des Endeffektors (15) gegenüber dem Aktuator.

4. Bewegungseinrichtung nach einem der vorhergehenden Ansprüche, **dadurch gekennzeichnet, daß** die Aktuatoren Vorschubantriebe (25) mit einem Linearantrieb (26) und einer damit gelenkig verbundenen Schubstange (27) aufweisen, insbesondere einen richtungsfesten Linearantrieb (26), wobei vorzugsweise der Linearantrieb (26) an dem Träger (29) befestigt ist.

5. Bewegungseinrichtung nach einem der Ansprüche 1 bis 3, **dadurch gekennzeichnet, daß** die Aktuatoren (13) Teleskopantriebe sind, vorzugsweise hydraulisch oder pneumatisch, wobei insbesondere die Zylinder (17) an dem Träger (29) gelagert sind.

6. Bewegungseinrichtung nach einem der vorhergehenden Ansprüche, **dadurch gekennzeichnet, daß** die Führungsmittel (20) eine Gelenkkette aufweisen, die mit dem Träger (29) und dem Endeffektor (15) gelenkig verbunden und nur in der vorgegebenen Bewegungsfläche bewegbar ist, wobei die Gelenkkette vorzugsweise aus einer an dem Träger (29) gelagerten Schwinge (21) und einer damit über ein Gelenk (23) verbundenen und an dem Endeffektor (15) gelagerten Koppel (22) besteht.

7. Bewegungseinrichtung nach einem der vorhergehenden Ansprüche, **dadurch gekennzeichnet, daß** die vorgegebene Bewegungsfläche eine Bewegungsebene ist, wobei vorzugsweise die Führungsmittel (20) Gelenkachsen (14, 23) aufweisen, die senkrecht zu der Bewegungsebene verlaufen.

8. Bewegungseinrichtung nach einem der vorhergehenden Ansprüche, **gekennzeichnet durch** Bewegungsmittel (32) zur Bewegung von an dem Endeffektor (15) angebrachten Vorrichtungen (33) mit einer im wesentlichen senkrecht zur Bewegungsfläche verlaufenden Bewegungsrichtung, wobei die Bewegungsmittel (32) vorzugsweise an dem Endeffektor (15) vorgesehen sind.

9. Bewegungseinrichtung nach einem der vorhergehenden Ansprüche, **dadurch gekennzeichnet, daß** der Endeffektor (15) eine Greifvorrichtung (33) für Gegenstände trägt, insbesondere für Leiterplatten (35), wobei er vorzugsweise eine Saugvorrichtung (35) zum Erfassen der Gegenstände durch Unterdruck aufweist.

10. Bewegungseinrichtung nach einem der vorhergehenden Ansprüche, **dadurch gekennzeichnet, daß** in einer Grundstellung des Endeffektors (15) eine Linie durch wenigstens zwei Lagerpunkte (14) der Aktuatoren (13, 25) an dem Träger (29) in einem Winkel zu einer Linie durch wenigstens zwei Lagerpunkte (14) an dem Endeffektor (15) verläuft, insbesondere einem Winkel von etwa 30° bis 60°, wobei der Endeffektor (15) vorzugsweise von dieser Grundstellung aus um bis zu 90° in der Bewegungsfläche verschwenkbar ist.

11. Bewegungseinrichtung nach einem der vorhergehenden Ansprüche, **dadurch gekennzeichnet, daß** sich der Endeffektor (15) im wesentlichen unterhalb des Trägers (29) und der Aktuatoren (13, 25) befindet und im wesentlichen nach unten und quer zur Bewegungsfläche arbeitet, wobei insbesondere an einer Seite des Trägers (29) Führungsmittel (20) vorgesehen sind und der Endeffektor (15) im wesentlichen zu der anderen Seite hin bewegbar ist.

12. Bewegungseinrichtung nach einem der vorhergehenden Ansprüche, **gekennzeichnet durch** eine Lageerfassungseinrichtung für den Endeffektor (15), vorzugsweise mit Erfassungsmitteln an den Aktuatoren (13, 25), insbesondere Weg-Erfassungs-Sensoren an den Aktuatoren und/oder Drehwinkelgebern an den Lagerpunkten (14).

## Claims

1. Movement device (11) for moving an end effector (15), particularly for handling substrates (35) in the electronics industry and which has a support (29) to which the end effector (15) is loosely fixed in a predetermined movement surface, having:
- at least two linearly operating actuators (13, 25) pivotably mounted about different pins (14) on the support (29) and connected in articulated manner to the effector (15) at different points (14),
- a further drive (13, 25) for moving the end effector (15) and
- with guide means for the positive movement of the end effector (15) in the predetermined movement surface,
in which the end effector (15) is connected by means of a guide rocker (20) as the guide means and three linearly operating actuators (13, 25) to the support (29), two actuators having a common pivot pin (14) on the support (29) and/or precisely one of these actuators has a common pivot pin (14) with the third actuator on the end effector (15).

2. Movement device according to claim 1, **characterized in that** the further drive is a third linearly operating actuator (13, 25) pivotably mounted about a pin (14) on support (29) and connected in articulated manner to the end effector (15).

3. Movement device according to claim 1, **characterized in that** the further drive is a rotary drive acting on an actuator (13, 25) and it is preferably fitted between the actuator and the end effector (15) for rotating the end effector (15) relative to the actuator.

4. Movement device according to one of the preceding claims, **characterized in that** the actuators have feed drives (25) with a linear drive (26) and a push rod (27) connected in articulated manner thereto, in particular a fixed direction linear drive (26), which is preferably secured to the support (29).

5. Movement device according to one of the claims 1 to 3, **characterized in that** the actuators (13) are telescopic drives, preferably of a hydraulic or pneumatic nature and in particular the cylinders (17) are mounted on the support (29).

6. Movement device according to one of the preceding claims, **characterized in that** the guide means (20) have a link chain connected in articulated manner to the support (29) and the end effector (15) and which is only movable in the predetermined movement surface, the link chain preferably comprising a rocker (21) mounted on the support (29) and a coupler (22) connected therewith by means of a joint (23) and mounted on the end effector (15).

7. Movement device according to one of the preceding claims, **characterized in that** the predetermined movement surface is a movement plane and preferably the guide means (20) have pivot pins (14, 23) perpendicular to the movement plane.

8. Movement device according to one of the preceding claims, **characterized by** movement means (32) for moving mechanisms (33) fitted to the end effector (15) with a movement direction substantially perpendicular to the movement surface, the movement means (32) preferably being provided on the end effector (15).

9. Movement device according to one of the preceding claims, **characterized in that** the end effector (15) carries a gripping device (33) for articles, particularly for printed circuit boards (35) and preferably has a suction device (35) for seizing the articles by vacuum.

10. Movement device according to one of the preceding claims, **characterized in that** in a normal position of the end effector (15) a line through at least two support points (14) of the actuators (13, 25) on the support (29) is at an angle to a line through at least two support points (14) on the end effector (15), particularly an angle of approximately 30 to 60°, the end effector (15) preferably being pivotable from said normal position by up to 90° in the movement surface.

11. Movement device according to one of the preceding claims, **characterized in that** the end effector (15) is essentially located below the support (29) and the actuators (13, 25) and operates substantially downwards and at right angles to the movement surface and in particular on one side of the support (29) guide means (20) are provided and the end effector (15) is substantially movable towards the other side.

12. Movement device according to one of the preceding claims, **characterized by** a position detecting device for the end effector (15), preferably with detection means on the actuators (13, 25), particularly path detection sensors on the actuators and/or rotation angle sensors on the support points (14).

## Revendications

1. Dispositif de mouvement (11) pour le déplacement d'un effecteur terminal (15), notamment pour le maniement de substrats (35) dans l'industrie électronique, qui présente un support (29) auquel est accroché l'effecteur terminal (15) qui peut être déplacé dans une surface de mouvement prédéterminée, avec :
- au moins deux actuateurs (13, 25) à action linéaire, qui sont logés de manière pivotable sur le support (29) autour d'axes (14) différents et qui sont raccordés de manière pivotable à l'effecteur terminal (15) à des points (14) différents,
- un autre dispositif moteur (13, 25) pour le déplacement de l'effecteur terminal (15) et
- des moyens de guidage pour le déplacement obligatoire de l'effecteur terminal (15) dans la surface de mouvement prédéterminée,
l'effecteur terminal (15) étant raccordé au support (29) au moyen d'une manivelle oscillante de guidage (20) en tant que dispositif de guidage et de trois actuateurs (13, 25) à action linéaire, deux actuateurs présentant au support (29) un seul axe de pivotement (14) et/ou exactement un seul de ces actuateurs présentant sur l'effecteur terminal (15) un axe de pivotement (14), qu'il partage avec le troisième actuateur.

2. Dispositif de mouvement d'après la revendication 1, **caractérisé en ce que** le dispositif moteur ultérieur est un troisième actuateur (13, 25) à action linéaire, qui est logé de manière pivotable sur le support (29) autour d'un axe (14) et qui est raccordé de manière articulée à l'effecteur terminal (15).

3. Dispositif de mouvement d'après la revendication 1, **caractérisé en ce que** le dispositif moteur ultérieur est un mécanisme d'entraînement rotatif, qui s'engage sur un actuateur (13, 25) en étant appliqué de préférence entre l'actuateur et l'effecteur terminal (15) pour déplacer angulairement l'effecteur terminal (15) par rapport à l'actuateur.

4. Dispositif de mouvement d'après une des revendications précédentes, **caractérisé en ce que** les actuateurs présentent des mécanismes d'avance (25) avec un mécanisme d'entraînement linéaire (26) et une bielle de poussée (27) raccordée à celui-ci de manière articulée, notamment un mécanisme d'entraînement linéaire (26) en direction fixe, le mécanisme d'entraînement linéaire (26) étant de préférence fixé au support (29).

5. Dispositif de mouvement d'après une des revendications de 1 à 3, **caractérisé en ce que** les actuateurs (13) sont des mécanismes de commande télescopiques, de préférence hydrauliques ou pneumatiques, notamment les cylindres (17) étant logés au support (29).

6. Dispositif de mouvement d'après une des revendications précédentes, **caractérisé en ce que** les moyens de guidage (20) présentent une chaîne articulée, qui est raccordée de manière articulée au support (29) et à l'effecteur terminal (15) et qui est déplaçable uniquement dans la surface de mouvement prédéterminée, la chaîne articulée étant constituée de préférence d'une bielle oscillante (21) logée au support (29) et d'une bielle (22) raccordée à la bielle oscillante par une articulation (23) et logée à l'effecteur terminal (15).

7. Dispositif de mouvement d'après une des revendications précédentes, **caractérisé en ce que** la surface de mouvement prédéterminée est un plan de mouvement, les moyens de guidage (20) présentant de préférence des axes d'articulation (14, 23), qui s'étendent en direction orthogonale par rapport au plan de mouvement.

8. Dispositif de mouvement d'après une des revendications précédentes, **caractérisé par** des moyens de déplacement (32) pour le déplacement de dispositifs (33) appliqués à l'effecteur terminal (15) dans une direction de mouvement qui s'étend en substance orthogonalement par rapport à la surface de mouvement, les moyens de déplacement (32) étant prévus de préférence auprès de l'effecteur terminal (15).

9. Dispositif de mouvement d'après une des revendications précédentes, **caractérisé en ce que** l'effecteur terminal (15) porte un dispositif de préhension (33) pour des objets, notamment pour des cartes de circuits imprimés (35) et qu'il présente de préférence un dispositif aspirant (35) pour la saisie des objets par l'effet d'une souspression.

10. Dispositif de mouvement d'après une des revendications précédentes, **caractérisé en ce que** dans une position de base de l'effecteur terminal (15) une ligne, passant au moins à travers deux points de logement (14) des actuateurs (13, 25), s'étend sur le support (29) sous un certain angle par rapport à une ligne passant au moins à travers deux points de logement (14) sur l'effecteur terminal (15), notamment sous un angle a peu près de 30° à 60°, l'effecteur terminal (15) pouvant être pivoté dans le plan de mouvement de préférence à partir de cette position de base d'un angle allant jusqu'à 90°.

11. Dispositif de mouvement d'après une des revendications précédentes, **caractérisé en ce que** l'effecteur terminal (15) se trouve essentiellement au-dessous du support (29) et des actuateurs (13, 25) et qu'il opère essentiellement vers le bas et transversalement par rapport à la surface de mouvement, des moyens de guidage (20) étant prévus notamment d'un côté du support (29) et l'effecteur terminal (15) étant déplaçable essentiellement vers l'autre côté.

12. Dispositif de mouvement d'après une des revendications précédentes, **caractérisé par** un dispositif de détection de position pour l'effecteur terminal (15), de préférence avec des moyens de détection sur les actuateurs (13, 25), notamment des senseurs détectant la voie sur les actuateurs et/ou des capteur d'angle d'orientation aux points de logement (14).
